# EUROPEAN PATENT APPLICATION

(11) **EP 3 109 754 A1**
(43) Date of publication of application: **28.12.2016**
(21) Application number: 16172343.2
(22) Date of filing: 31.05.2016
(51) Int. Cl.: G06F 9/30

(54) **SYSTEMS, METHODS, AND APPARATUSES FOR IMPROVING PERFORMANCE OF STATUS DEPENDENT COMPUTATIONS**

(30) Priority: 27.06.2015 US 201514752887
(71) Applicant: Intel Corporation, Santa Clara, CA 95054 (US)
(72) Inventor: MATVEYEV, Pavel G., 119633 Moscow (RU); MASLENNIKOV, Dmitry M., 123182 Moscow (RU); CAPRIOLI, Paul, Hillsboro, OR Oregon 97123 (US); HABER, Gadi, 36862 Nesher, HA (IL)
(74) Representative: Samson & Partner Patentanwälte mbB

(57) **Abstract**

Embodiments for systems, methods, and apparatuses for improving performance of status dependent computations are detailed. In an embodiment, an hardware apparatus comprises decoder hardware to decode an instruction, operand retrieval hardware to retrieve data from at least one source operand associated with the instruction decoded by the decoder hardware, and execution hardware to execute the decoded instruction to generate a result including at least one status bit and to cause the result and at least one status bit to be stored in a single destination physical storage location, wherein the at least one status bit and result are accessible through a read of the single register.

## Description

### Field

The various embodiments described herein relate to processor architecture. Background

In most architectures, there is only one architectural register, such as RFLAGS, to refer to the status flags of a computation. This limits the ability of a compiler or binary translator to reorder instructions for greater performance and/or energy efficiency.

### BRIEF DESCRIPTION OFTHE DRAWINGS

The present invention is illustrated by way of example and not limitation in the figures of the accompanying drawings, in which like references indicate similar elements, and in which:
**Figure 1** illustrates an embodiment of registers within a hardware processor (or processor core).
**Figure 2** illustrates exemplary embodiments of instruction formats for status consuming instructions.
**Figure 3** illustrates an embodiment of a method of execution of a status consuming instruction in a processor.
**Figure 4** illustrates exemplary embodiments of instruction formats for status writing instructions.
**Figure 5** illustrates an embodiment of a method of execution of a status writing instruction in a processor.
**Figure 6A** is a block diagram illustrating both an exemplary in-order pipeline and an exemplary register renaming, out-of-order issue/execution pipeline according to embodiments of the invention.
**Figure 6B** is a block diagram illustrating both an exemplary embodiment of an in-order architecture core and an exemplary register renaming, out-of-order issue/execution architecture core to be included in a processor according to embodiments of the invention.
**Figures 7A-B** illustrate a block diagram of a more specific exemplary in-order core architecture, which core would be one of several logic blocks (including other cores of the same type and/or different types) in a chip.
**Figure 8** is a block diagram of a processor 800 that may have more than one core, may have an integrated memory controller, and may have integrated graphics according to embodiments of the invention.
**Figures 9-12** are block diagrams of exemplary computer architectures.
**Figure 13** is a block diagram contrasting the use of a software instruction converter to convert binary instructions in a source instruction set to binary instructions in a target instruction set according to embodiments of the invention.

### DETAILED DESCRIPTION

In the following description, numerous specific details are set forth. However, it is understood that embodiments of the invention may be practiced without these specific details. References in the specification to "one embodiment," "an embodiment," "an exemplary embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

One solution to only having a single flags (condition code register) is to provide two variants of each (potentially) flag-producing computation. For example, the instruction ROR rotates right and updates the carry flag while RORX rotates right without affecting any flags. This allows some compiler-based re-ordering, in particular around instructions whose flag results can be suppressed since they are never consumed.

Another solution is to provide multiple architectural flag registers. For example, one can imagine RFLAGS0, RFLAGS1, RFLAGS2, and RFLAGS3. Both producer and consumer instructions can then specify (with 2 bits) which flag register they wish to reference. This requires adding two bits to every producer-nearly every arithmetic instruction-and every consumer (e.g., conditional branches, conditional moves). Furthermore, in an out-of-order processor, these four flag registers must be renamed.

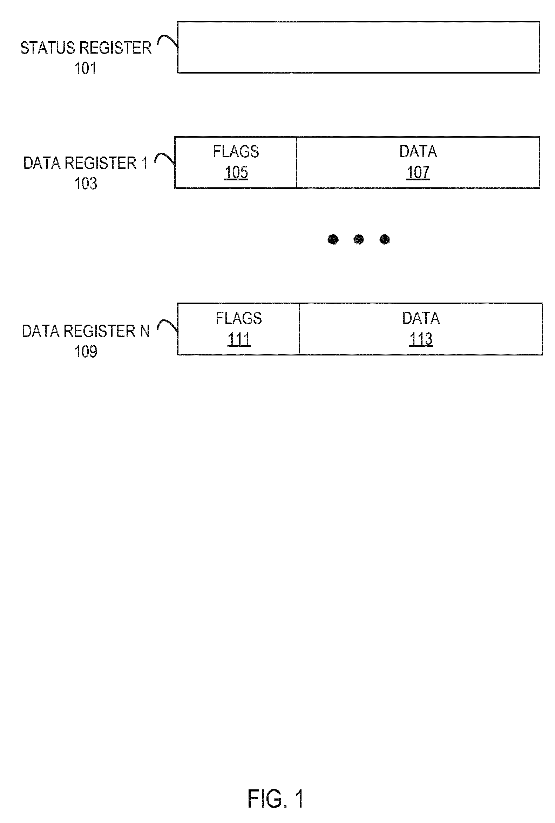

Figure 1 illustrates an embodiment of registers within a hardware processor (or processor core). In this embodiment, there is a status register 101 to store status information about the state of the processor. This register may have many different names including, but not limited to, a FLAGS register (such as FLAGFS, EFLAGS, or RFLAGS), a program status word (PSW), a condition code (CC) register, etc. Examples of status bits (or flags) stored in the status register include, but are not limited to, an indication of a carry (C), parity (P), adjust (A), zero (Z), sign (S), and overflow (O). Through the status register, an instruction may take an action based on an outcome of a previous instruction by evaluating one or more of the status bits. An execution of an instruction sets the status bits of the status register 701 based upon the results of the instruction itself. For example, only certain bits (flags) of the status register such as the C flag are set in some rotate instructions while A, Z, S, and P would be unaffected.

There are also a plurality of physical data registers 1103 through N 109. In some embodiments, the number of physical data registers 103, 109 is more than are architecturally visible to a programmer. In these embodiments, the physical registers are assigned to an architectural register during a renaming portion of an instruction execution pipeline.

The size of the data portion 107 and 113 of the data registers varies depending on the implementation. For example, the data portion may be 8-bit, 16-bit, 32-bit, 64-bit, 128-bit, 256-bit, 512-bit, 1,024-bit, etc. The data portion may also be used to store integer, floating-point, or packed (either integer or floating-point) data values.

A way of implementing status in a processor, for example, an out-of-order processor, is to expand each physical data register 103 and 109 to include the status flag results of a computation (C, O, S, P, A, and Z). For example, for a 64-bit data register this expansion would lead to either a physical 70-bit register. The larger register is illustrated as FLAGS 105 and 111 which are appended to the data portion 107 and 113 such that they are physically co-located with the result of the computation. Renaming hardware within the processor renames to a physical register in the same way that an architectural register renames to a physical register. As such, a data register refers to the first 64 bits of its physical register and status refers to the flags portion of the physical register. While these registers are shown in a little endian format (with the data being in the least significant bits and the status bit(s) being stored in the most significant bit(s)), in other embodiments the storage of data and status bits is stored in an opposite manner.

Consider the following traditional examples. When seven is subtracted from RAX with the instruction "sub rax, $7", the resulting value for architectural register RAX is written to a physical register (e.g., P39) along with the flag results. As such, both the RAX register and the status register now point to physical register P39. Next, say, the instruction "add rbx, $3" writes its results into physical register P40. Now, both the RBX register and the status register point to physical register P40. The RAX register still points to physical register P39. Unfortunately, while the flags result of the subtract instruction is still present in the hardware in P39, there is no present way for software to access it.

Detailed below are embodiments of new status consuming instructions (such as conditional branches), and their execution, that specify which physical register should serve as the source of the status bit(s) they consume by having the instructions reference the architectural register that holds the result produced simultaneously with the desired status results. This can be done as long as the specific architectural register has not yet been overwritten by a subsequent instruction, regardless of whether any subsequent instructions have overwritten the status register. For example, even when the status register is overwritten, the status bit(s) stored with the physical data register are used to make a conditional decision. Of course, existing instructions may continue to use the status register without any modification.

In some embodiments, the status consuming instructions have a register field in their encoding to indicate which architectural register holds the results (status information) of the computation to which the condition refers. For example, the new instruction "jne rcx.f, L2" evaluates the "not equal" test on the flags produced by the same instruction that produced the integer value in RCX (the ".f" indicates flags are stored). As an illustrative assembly language convention, the integer result in the physical register referenced architecturally by RCX as "RCX" and the flag result in the same physical register as "RCX.F". Note that software now has access to as many flag result registers as there are architectural integer registers at a relatively low hardware cost. Of course, in some embodiments, this flag result feature is limited to a subset of the available architectural registers.)

Note that conditional instructions other than branches and/or jumps can be provided as well. For example, conditional moves and conditional memory operations can be specified to consume flags from RCX.F (in addition to the status register).

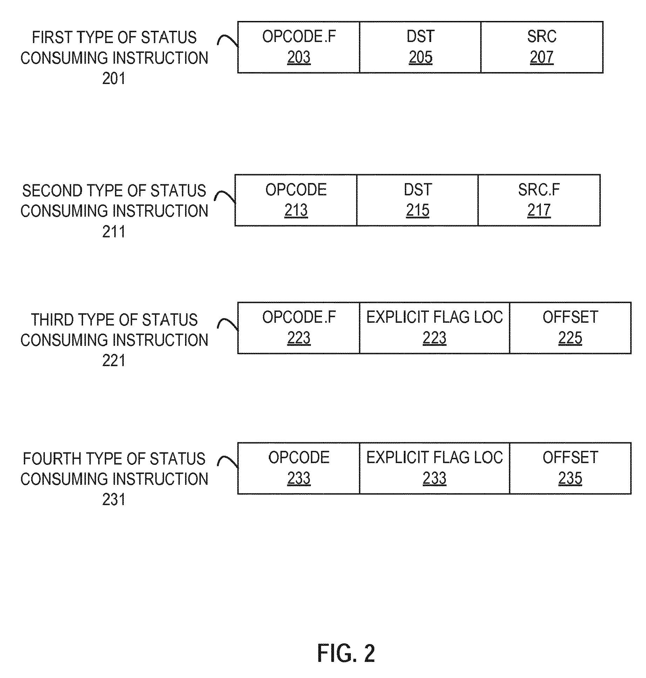

Figure 2 illustrates exemplary embodiments of instruction formats for status consuming instructions. A first type of status writing instruction 201 includes an opcode 203 to indicate that the execution of the instruction is to evaluate at least one status bit of the source operand 207 to determine if an operation is to be performed. For example, should a conditional move from the source 207 to the destination 205 be performed based on one or more of the status bits being set.

A second type of status writing instruction 211 includes an opcode 213 for the status consuming instruction to indicate an operation to be performed. The source operand 217 includes an indication that it stores status information. For example, source.f may be used to indicate that the source includes status data to be consumed. The destination 215 is the destination of the operation.

A third type of status writing instruction 221 includes an opcode 223 to indicate that the execution of the instruction is to evaluate at least one status bit of the explicit flag location (source operand) 223 to determine if an operation is to be performed. For example, should a conditional jump to an offset 225 be performed based on one or more of the status bits being set.

A fourth type of status writing instruction 231 includes an opcode 233 to indicate that the execution of the instruction is to evaluate at least one status bit to determine if an operation is to be performed. The explicit flag location (source operand) 233 indicates that it stores status information in addition to data. For example, source.f may be used to indicate that the source includes status data to be consumed. For example, should a conditional jump to an offset 235 be performed based on one or more of the status bits being set.

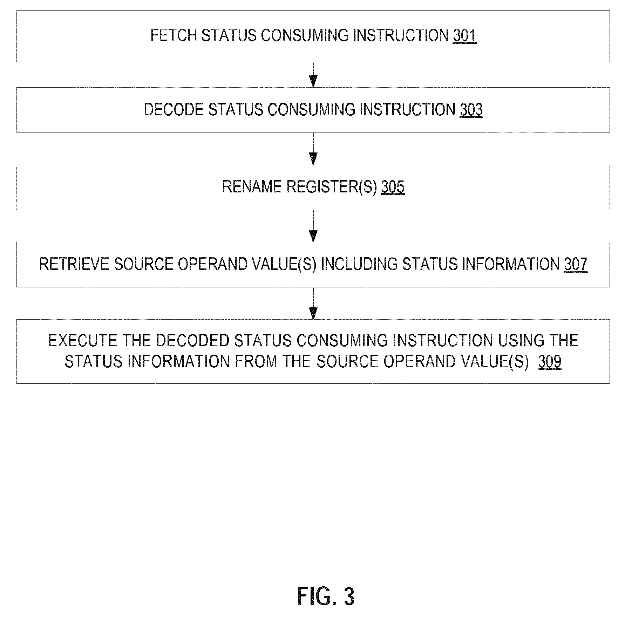

Figure 3 illustrates an embodiment of a method of execution of a status consuming instruction in a processor. Exemplary pipelines and processor (or cores) are detailed in later figures. Additionally, exemplary instruction formats for status consuming instructions have been detailed above.

A status consuming instruction is fetched by fetch hardware at 301. Typically, instructions are stored in an instruction cache prior to fetching.

The fetched instruction is decoded by decode hardware at 303. The decoding of the instruction determines which instruction to be performed and the operands to fetch. In some embodiments, the instruction is decoded into micro-operations.

In some embodiments, register renaming is performed on one or more of the operands of the instruction by rename/allocate hardware at 305. For example, the source operand is mapped from an architectural register to a physical register.

Source operand values are retrieved from physical register files or memory at 307.

The decoded status consuming instruction is executed by a functional unit (execution hardware) on the retrieved source operand(s) at 309. For example, a jump not zero (JNZ) is performed. The execution of the decoded status consuming instruction causes a determination of if a status condition is met by looking at the status information from the retrieved source. In the JNZ instance, a jump is performed when the zero status (such as the zero flag) is not set in the status portion of the source operand.

While the above figure has been described with respect to hardware, one or more of the aspects of the method may be performed in software, for example, as a part of an emulation. For example, the decoder may be implemented in software or firmware and not hardware.

Detailed below are embodiments of new status writing instructions, and their execution, that specify which physical register should serve as the destination of the status information by having them reference the architectural register that holds the result produced simultaneously with the status results.

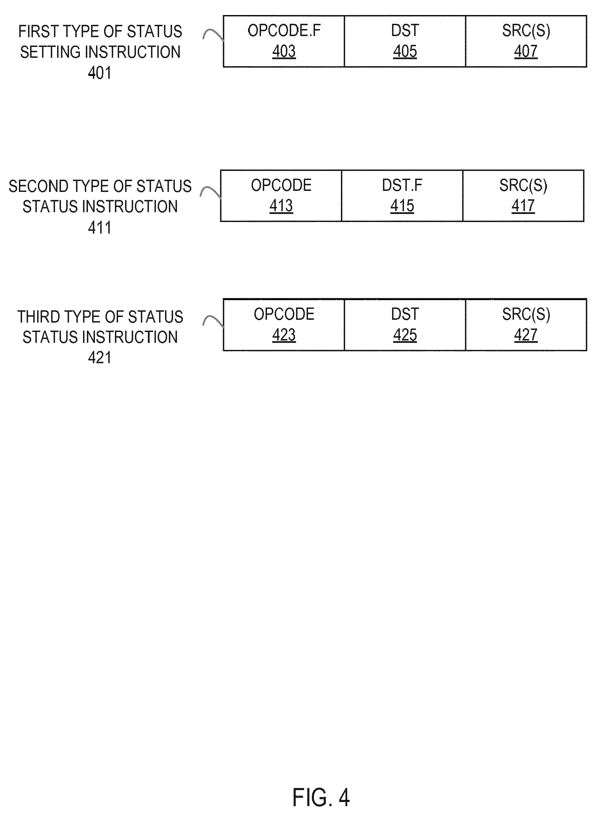

Figure 4 illustrates exemplary embodiments of instruction formats for status writing instructions. A first type of status writing instruction 401 includes an opcode 403 to indicate that the execution of the instruction is to cause storage of the at least one status bit along with the result to a single destination physical storage location associated with the destination operand 405. The first type of status writing instruction 401 also typically includes at least one source operand 407. An example of such an instruction is SUB.F DST, SRC wherein the opcode of SUB.F indicates that this type of instruction is different than a normal subtract instruction and is to store status information in the destination (DST).

A second type of status writing instruction 411 includes an opcode 413 for the instruction and a destination operand 415 that indicates that the result of the instruction and its status information are to be stored in a single destination physical location. The second type of status writing instruction 411 also typically includes at least one source operand 417. An example of such an instruction is SUB DST.F, SRC wherein the destination of DST.F indicates that this type of instruction is different than a normal subtraction and is to store status information in the destination (DST).

A third type of status writing instruction 421 includes an opcode 423 for the instruction and a destination operand 425. This type of status writing instruction does not indicate that the status information is to **not** be stored along with the result in in a single destination physical location. The third type of status writing instruction 411 also typically includes at least one source operand 417. An example of such an instruction is SUB DST, SRC. Non-status writing instruction variants would have a different opcode such as SUBX to delineate that the execution of the instruction is to not provide accessible status bits. As such, embodiments detailed herein do not conflict with an instruction set architecture that contains both flag- producing and flag-suppressing variations of instructions. For example, an instruction SUB which writes a status register and an instruction SUBX which does not. In the embodiments detailed herein, both instruction variants write both the integer result and the flag result to the destination physical register. However, only the SUB variant renames the status register to point to the destination location of the instruction. In the example above, the SUB could be replaced by SUBX and a consuming instruction (such as JNE) could still consume RCX.F. Both SUB and SUBX would allocate, say, physical register P39 as a destination. Both would write the integer result of the subtraction to P39 and both would write the flag result of the subtraction to P39. Both would rename the architectural register RCX to P39. But only SUB would rename the status register to P39. Until RCX is subsequently renamed by another instruction, the new conditional branches can consume RCX.F.

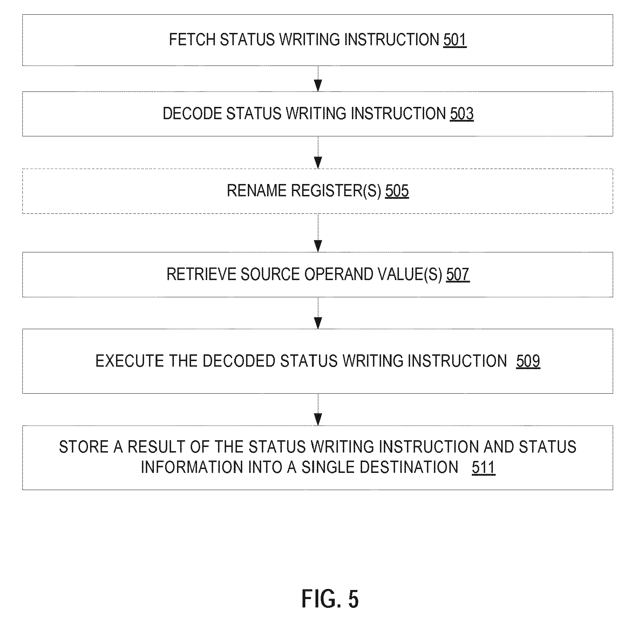

Figure 5 illustrates an embodiment of a method of execution of a status writing instruction in a processor. Exemplary pipelines and processor (or cores) are detailed in later figures. Additionally, exemplary instruction formats for status writing instructions have been detailed above.

A status writing instruction is fetched by fetch hardware at 501. Typically, instructions are stored in an instruction cache prior to fetching.

The fetched instruction is decoded by decode hardware at 503. The decoding of the instruction determines which instruction to be performed and the operands to fetch. In some embodiments, the instruction is decoded into micro-operations.

In some embodiments, register renaming is performed on one or more of the operands of the instruction by rename/allocate hardware at 505. For example, the destination operand is mapped from an architectural register to a physical register.

Source operand values are retrieved from physical register files or memory at 507.

The decoded status writing instruction is executed by a functional unit (execution hardware) on the retrieved source operand(s) at 509. For example, a subtract is performed. The execution of the decoded status writing instruction causes a result to be computed and status information to be generated (such as C, O, S, P, A, and Z as detailed above).

Writeback hardware (such as retirement hardware) stores a result of the executed decoded status writing instruction and the status information into a single destination register at 511. In a processor (core) that uses renaming, the register is mapped from an architectural version to a physical one. Additionally, the status information (such as a flags register) is mapped to the physical register having both status and data.

While the above figure has been described with respect to hardware, one or more of the aspects of the method may be performed in software, for example, as a part of an emulation. For example, the decoder may be implemented in software or firmware and not hardware.

What is detailed herein increases the architectural state of a program by allowing software to access hardware physical state that was previously hidden. This has implications for context switching and can be handled in the usual ways. For example, the additional state can be saved and restored by the operating system, using XSAVE for example. Alternatively, this capability can be utilized only within transactional regions (e.g., regions between XBEGIN and XEND) so that the additional architectural state is both produced and consumed in an atomic fashion. Or, the new architectural state can be managed by runtime software, such as limited to code produced via dynamic binary translation in which traps and interrupts are intercepted by a runtime management software or firmware layer.

The above instructions provide many benefits. Typically, there is only a single architectural value for the flags (Carry, Overflow, Sign, Zero, etc.) in the status register. Therefore, it is often not possible for a compiler, or binary translator, to place a flag computation above, and out of, a loop. Consider the following example:

```
       for (int rsi = 0; rsi < 1000; ++rsi) {if (rax == rbx) {
             x[rsi] = calculation1;
             } else {
             x[rsi] = calculation2;
             }
       }
```

In pseudo-assembly, this becomes:
xor rsi, rsi // set rsi = 0;
L1: cmp rax, rbx;
jne L2;
x[rsi] = calculation1;
jmp L3;
L2: x[rsi] = calculation2;
L3: add rsi, $1;
cmp rsi, $1000;
jl L1;

In particular, note that the comparison of RAX and RBX occurs inside the loop, and so it is executed 1000 times even though it always produces the same result. Its status (flag) results are overwritten by the later, and necessary, loop index comparison. Both compare instructions produce flags that are needed by subsequent consumers (conditional branches).

Now, using destination status writing and consuming instructions, the above example may be compiled (or binary translated) into:
xor rsi, rsi // set rsi = 0;
sub rcx = rax, rbx;
L1: jne rcx.f, L2;
x[rsi] = calculation1;
jmp L3;
L2: x[rsi] = calculation2;
L3: add rsi, $1;
cmp rsi, $1000;
jl L1;

The comparison of RAX to RBX has been moved above the loop. The value in RCX.F (the destination register with the status information) is calculated once and used 1000 times. The compiler has not (and may not) use the integer register RCX as the destination of any instructions performed within the loop as doing so would overwrite RCX.F as well as RCX.

Incidentally, the code above is not yet optimal. Moving the comparison above the loop allows further optimizations, such as avoiding the last conditional branch (JL) jumping to another conditional branch (JNE) above. Thus:
xor rsi, rsi // set rsi = 0;
sub rcx = rax, rbx;
jne rcx.f, L2;
L1: x[rsi] = calculation1;
jmp L3;
L2: x[rsi] = calculation2;
L3: add rsi, $1;
cmp rsi, $1000;
jge L4; // typically not-taken
jne rcx.f, L2;
jmp L1;
L4:

The instruction that produces RCX.F above happens to be written as a three operand (non-destructive source) instruction so that the sources (RAX and RBX) are not overwritten. This is orthogonal to embodiments of the present invention. The single subtract above can be replaced with "mov rcx, rax; sub rcx, rbx;" if non-destructive source instructions are not available in a given instruction set architecture (ISA).

The additions, subtractions, and comparisons above all update the status register. The conditional jump, JGE, above also refers to the condition determined by the status flags in status register.

Embodiments detailed herein may be executed on many different architectures including those detailed below.

Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

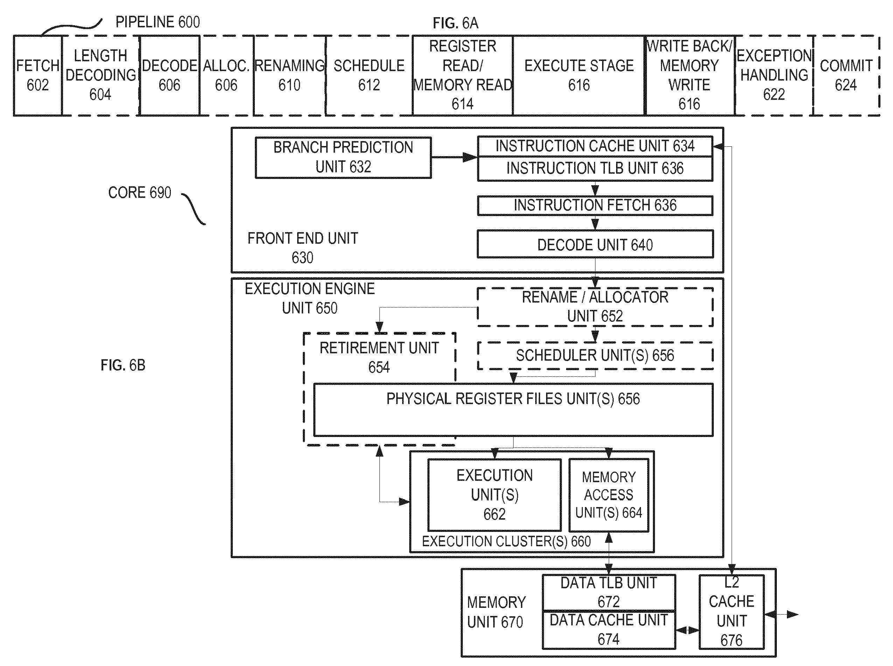

**Figure 6A** is a block diagram illustrating both an exemplary in-order pipeline and an exemplary register renaming, out-of-order issue/execution pipeline according to embodiments of the invention. **Figure 6B** is a block diagram illustrating both an exemplary embodiment of an in-order architecture core and an exemplary register renaming, out-of-order issue/execution architecture core to be included in a processor according to embodiments of the invention. The solid lined boxes in Figures 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 6A, a processor pipeline 600 includes a fetch stage 602, a length decode stage 604, a decode stage 606, an allocation stage 608, a renaming stage 610, a scheduling (also known as a dispatch or issue) stage 612, a register read/memory read stage 614, an execute stage 616, a write back/memory write stage 618, an exception handling stage 622, and a commit stage 624.

Figure 6B shows processor core 690 including a front end unit 630 coupled to an execution engine unit 650, and both are coupled to a memory unit 670. The core 690 may be a reduced instruction set computing (RISC) core, a complex instruction set computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front end unit 630 includes a branch prediction unit 632 coupled to an instruction cache unit 634, which is coupled to an instruction translation lookaside buffer (TLB) 636, which is coupled to an instruction fetch unit 638, which is coupled to a decode unit 640. The decode unit 640 (or decoder) may decode instructions, and generate as an output one or more micro-operations, micro-code entry points, microinstructions, other instructions, or other control signals, which are decoded from, or which otherwise reflect, or are derived from, the original instructions. The decode unit 640 may be implemented using various different mechanisms. Examples of suitable mechanisms include, but are not limited to, look-up tables, hardware implementations, programmable logic arrays (PLAs), microcode read only memories (ROMs), etc. In one embodiment, the core 690 includes a microcode ROM or other medium that stores microcode for certain macroinstructions (e.g., in decode unit 640 or otherwise within the front end unit 630). The decode unit 640 is coupled to a rename/allocator unit 652 in the execution engine unit 650.

The execution engine unit 650 includes the rename/allocator unit 652 coupled to a retirement unit 654 and a set of one or more scheduler unit(s) 656. The scheduler unit(s) 656 represents any number of different schedulers, including reservations stations, central instruction window, etc. The scheduler unit(s) 656 is coupled to the physical register file(s) unit(s) 658. Each of the physical register file(s) units 658 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 658 comprises a vector registers unit, a write mask registers unit, and a scalar registers unit. These register units may provide architectural vector registers, vector mask registers, and general purpose registers. The physical register file(s) unit(s) 658 is overlapped by the retirement unit 654 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 654 and the physical register file(s) unit(s) 658 are coupled to the execution cluster(s) 660. The execution cluster(s) 660 includes a set of one or more execution units 662 and a set of one or more memory access units 664. The execution units 662 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 656, physical register file(s) unit(s) 658, and execution cluster(s) 660 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster-and in the case of a separate memory access pipeline, certain embodiments are implemented in which only the execution cluster of this pipeline has the memory access unit(s) 664). It should also be understood that where separate pipelines are used, one or more of these pipelines may be out-of-order issue/execution and the rest in-order.

The set of memory access units 664 is coupled to the memory unit 670, which includes a data TLB unit 672 coupled to a data cache unit 674 coupled to a level 2 (L2) cache unit 676. In one exemplary embodiment, the memory access units 664 may include a load unit, a store address unit, and a store data unit, each of which is coupled to the data TLB unit 672 in the memory unit 670. The instruction cache unit 634 is further coupled to a level 2 (L2) cache unit 676 in the memory unit 670. The L2 cache unit 676 is coupled to one or more other levels of cache and eventually to a main memory.

By way of example, the exemplary register renaming, out-of-order issue/execution core architecture may implement the pipeline 600 as follows: 1) the instruction fetch 638 performs the fetch and length decoding stages 602 and 604; 2) the decode unit 640 performs the decode stage 606; 3) the rename/allocator unit 652 performs the allocation stage 608 and renaming stage 610; 4) the scheduler unit(s) 656 performs the schedule stage 612; 5) the physical register file(s) unit(s) 658 and the memory unit 670 perform the register read/memory read stage 614; the execution cluster 660 perform the execute stage 616; 6) the memory unit 670 and the physical register file(s) unit(s) 658 perform the write back/memory write stage 618; 7) various units may be involved in the exception handling stage 622; and 8) the retirement unit 654 and the physical register file(s) unit(s) 658 perform the commit stage 624.

The core 690 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 690 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 634/674 and a shared L2 cache unit 676, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

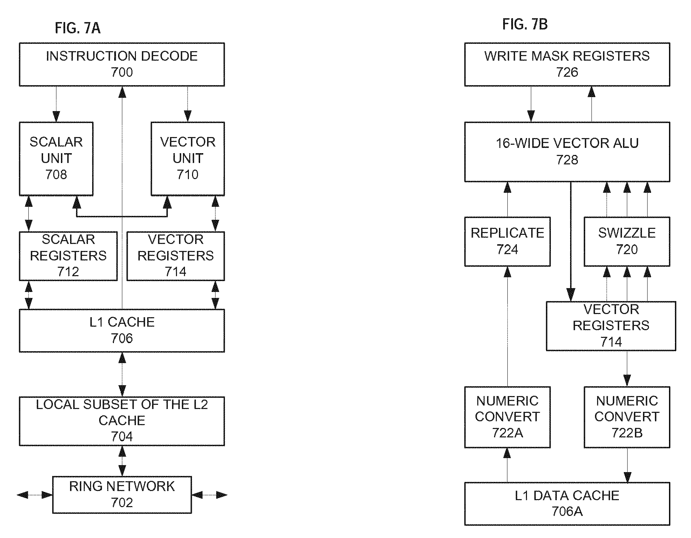

**Figures 7A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 7A is a block diagram of a single processor core, along with its connection to the on-die interconnect network 702 and with its local subset of the Level 2 (L2) cache 704, according to embodiments of the invention. In one embodiment, an instruction decoder 700 supports the x86 instruction set with a packed data instruction set extension. An L1 cache 706 allows low-latency accesses to cache memory into the scalar and vector units. While in one embodiment (to simplify the design), a scalar unit 708 and a vector unit 710 use separate register sets (respectively, scalar registers 712 and vector registers 714) and data transferred between them is written to memory and then read back in from a level 1 (L1) cache 706, alternative embodiments of the invention may use a different approach (e.g., use a single register set or include a communication path that allow data to be transferred between the two register files without being written and read back).

The local subset of the L2 cache 704 is part of a global L2 cache that is divided into separate local subsets, one per processor core. Each processor core has a direct access path to its own local subset of the L2 cache 704. Data read by a processor core is stored in its L2 cache subset 704 and can be accessed quickly, in parallel with other processor cores accessing their own local L2 cache subsets. Data written by a processor core is stored in its own L2 cache subset 704 and is flushed from other subsets, if necessary. The ring network ensures coherency for shared data. The ring network is bidirectional to allow agents such as processor cores, L2 caches and other logic blocks to communicate with each other within the chip. Each ring data-path is 1012-bits wide per direction.

Figure 7B is an expanded view of part of the processor core in Figure 7A according to embodiments of the invention. Figure 7B includes an L1 data cache 706A part of the L1 cache 704, as well as more detail regarding the vector unit 710 and the vector registers 714. Specifically, the vector unit 710 is a 16-wide vector processing unit (VPU) (see the 16-wide ALU 728), which executes one or more of integer, single-precision float, and double-precision float instructions. The VPU supports swizzling the register inputs with swizzle unit 720, numeric conversion with numeric convert units 722A-B, and replication with replication unit 724 on the memory input. Write mask registers 726 allow predicating resulting vector writes.

### Processor with integrated memory controller and graphics

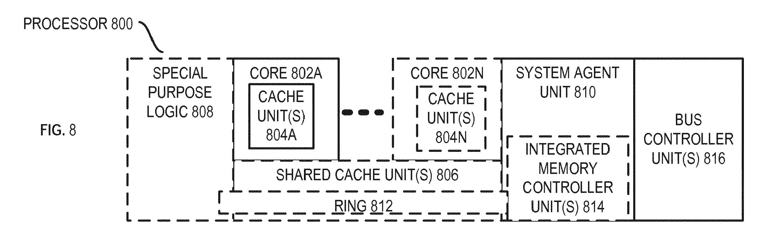

**Figure 8** is a block diagram of a processor 800 that may have more than one core, may have an integrated memory controller, and may have integrated graphics according to embodiments of the invention. The solid lined boxes in Figure 8 illustrate a processor 800 with a single core 802A, a system agent 810, a set of one or more bus controller units 816, while the optional addition of the dashed lined boxes illustrates an alternative processor 800 with multiple cores 802A-N, a set of one or more integrated memory controller unit(s) 814 in the system agent unit 810, and special purpose logic 808.

Thus, different implementations of the processor 800 may include: 1) a CPU with the special purpose logic 808 being integrated graphics and/or scientific (throughput) logic (which may include one or more cores), and the cores 802A-N being one or more general purpose cores (e.g., general purpose in-order cores, general purpose out-of-order cores, a combination of the two); 2) a coprocessor with the cores 802A-N being a large number of special purpose cores intended primarily for graphics and/or scientific (throughput); and 3) a coprocessor with the cores 802A-N being a large number of general purpose in-order cores. Thus, the processor 800 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 800 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 806, and external memory (not shown) coupled to the set of integrated memory controller units 814. The set of shared cache units 806 may include one or more mid-level caches, such as level 2 (L2), level 3 (L3), level 4 (L4), or other levels of cache, a last level cache (LLC), and/or combinations thereof. While in one embodiment a ring based interconnect unit 812 interconnects the integrated graphics logic 808, the set of shared cache units 806, and the system agent unit 810/integrated memory controller unit(s) 814, alternative embodiments may use any number of well-known techniques for interconnecting such units. In one embodiment, coherency is maintained between one or more cache units 806 and cores 802-A-N.

In some embodiments, one or more of the cores 802A-N are capable of multithreading. The system agent 810 includes those components coordinating and operating cores 802A-N. The system agent unit 810 may include for example a power control unit (PCU) and a display unit. The PCU may be or include logic and components needed for regulating the power state of the cores 802A-N and the integrated graphics logic 808. The display unit is for driving one or more externally connected displays.

The cores 802A-N may be homogenous or heterogeneous in terms of architecture instruction set; that is, two or more of the cores 802A-N may be capable of execution the same instruction set, while others may be capable of executing only a subset of that instruction set or a different instruction set.

### Exemplary Computer Architectures

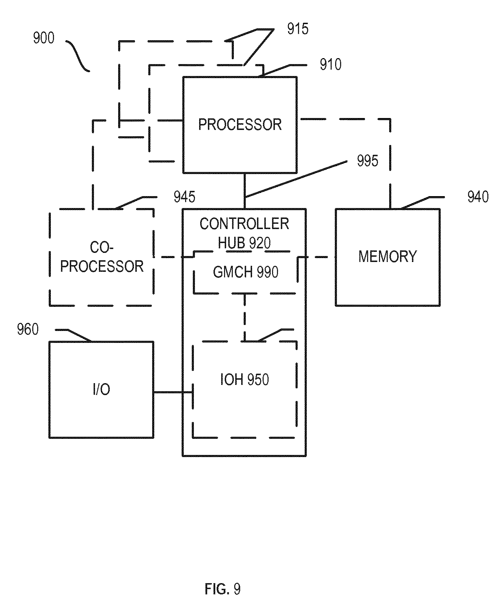

**Figures 9-12** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 9****,** shown is a block diagram of a system 900 in accordance with one embodiment of the present invention. The system 900 may include one or more processors 910, 915, which are coupled to a controller hub 920. In one embodiment the controller hub 920 includes a graphics memory controller hub (GMCH) 990 and an Input/Output Hub (IOH) 950 (which may be on separate chips); the GMCH 990 includes memory and graphics controllers to which are coupled memory 940 and a coprocessor 945; the IOH 950 is couples input/output (I/O) devices 960 to the GMCH 990. Alternatively, one or both of the memory and graphics controllers are integrated within the processor (as described herein), the memory 940 and the coprocessor 945 are coupled directly to the processor 910, and the controller hub 920 in a single chip with the IOH 950.

The optional nature of additional processors 915 is denoted in Figure 9 with broken lines. Each processor 910, 915 may include one or more of the processing cores described herein and may be some version of the processor 800.

The memory 940 may be, for example, dynamic random access memory (DRAM), phase change memory (PCM), or a combination of the two. For at least one embodiment, the controller hub 920 communicates with the processor(s) 910, 915 via a multi-drop bus, such as a frontside bus (FSB), point-to-point interface such as QuickPath Interconnect (QPI), or similar connection 995.

In one embodiment, the coprocessor 945 is a special-purpose processor, such as, for example, a high-throughput MIC processor, a network or communication processor, compression engine, graphics processor, GPGPU, embedded processor, or the like. In one embodiment, controller hub 920 may include an integrated graphics accelerator.

There can be a variety of differences between the physical resources 910, 915 in terms of a spectrum of metrics of merit including architectural, microarchitectural, thermal, power consumption characteristics, and the like.

In one embodiment, the processor 910 executes instructions that control data processing operations of a general type. Embedded within the instructions may be coprocessor instructions. The processor 910 recognizes these coprocessor instructions as being of a type that should be executed by the attached coprocessor 945. Accordingly, the processor 910 issues these coprocessor instructions (or control signals representing coprocessor instructions) on a coprocessor bus or other interconnect, to coprocessor 945. Coprocessor(s) 945 accept and execute the received coprocessor instructions.

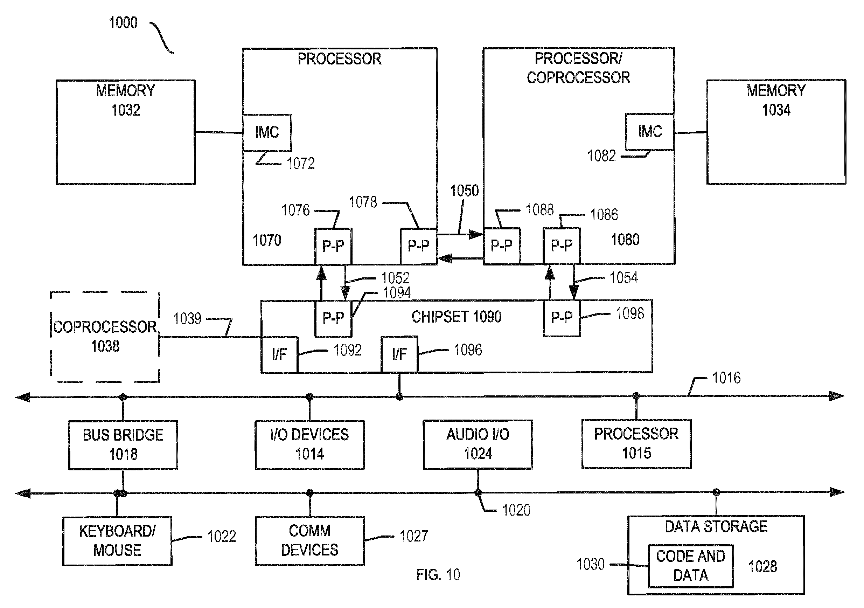

Referring now to **Figure 10****,** shown is a block diagram of a first more specific exemplary system 1000 in accordance with an embodiment of the present invention. As shown in Figure 10, multiprocessor system 1000 is a point-to-point interconnect system, and includes a first processor 1070 and a second processor 1080 coupled via a point-to-point interconnect 1050. Each of processors 1070 and 1080 may be some version of the processor 800. In one embodiment of the invention, processors 1070 and 1080 are respectively processors 910 and 915, while coprocessor 1038 is coprocessor 945. In another embodiment, processors 1070 and 1080 are respectively processor 910 coprocessor 945.

Processors 1070 and 1080 are shown including integrated memory controller (IMC) units 1072 and 1082, respectively. Processor 1070 also includes as part of its bus controller units point-to-point (P-P) interfaces 1076 and 1078; similarly, second processor 1080 includes P-P interfaces 1086 and 1088. Processors 1070, 1080 may exchange information via a point-to-point (P-P) interface 1050 using P-P interface circuits 1078, 1088. As shown in Figure 10, IMCs 1072 and 1082 couple the processors to respective memories, namely a memory 1032 and a memory 1034, which may be portions of main memory locally attached to the respective processors.

Processors 1070, 1080 may each exchange information with a chipset 1090 via individual P-P interfaces 1052, 1054 using point to point interface circuits 1076, 1094, 1086, 1098. Chipset 1090 may optionally exchange information with the coprocessor 1038 via a high-performance interface 1039. In one embodiment, the coprocessor 1038 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1090 may be coupled to a first bus 1016 via an interface 1096. In one embodiment, first bus 1016 may be a Peripheral Component Interconnect (PCI) bus, or a bus such as a PCI Express bus or another third generation I/O interconnect bus, although the scope of the present invention is not so limited.

As shown in Figure 10, various I/O devices 1014 may be coupled to first bus 1016, along with a bus bridge 1018 which couples first bus 1016 to a second bus 1020. In one embodiment, one or more additional processor(s) 1015, such as coprocessors, high-throughput MIC processors, GPGPU's, accelerators (such as, e.g., graphics accelerators or digital signal processing (DSP) units), field programmable gate arrays, or any other processor, are coupled to first bus 1016. In one embodiment, second bus 1020 may be a low pin count (LPC) bus. Various devices may be coupled to a second bus 1020 including, for example, a keyboard and/or mouse 1022, communication devices 1027 and a storage unit 1028 such as a disk drive or other mass storage device which may include instructions/code and data 1030, in one embodiment. Further, an audio I/O 1024 may be coupled to the second bus 1020. Note that other architectures are possible. For example, instead of the point-to-point architecture of Figure 10, a system may implement a multi-drop bus or other such architecture.

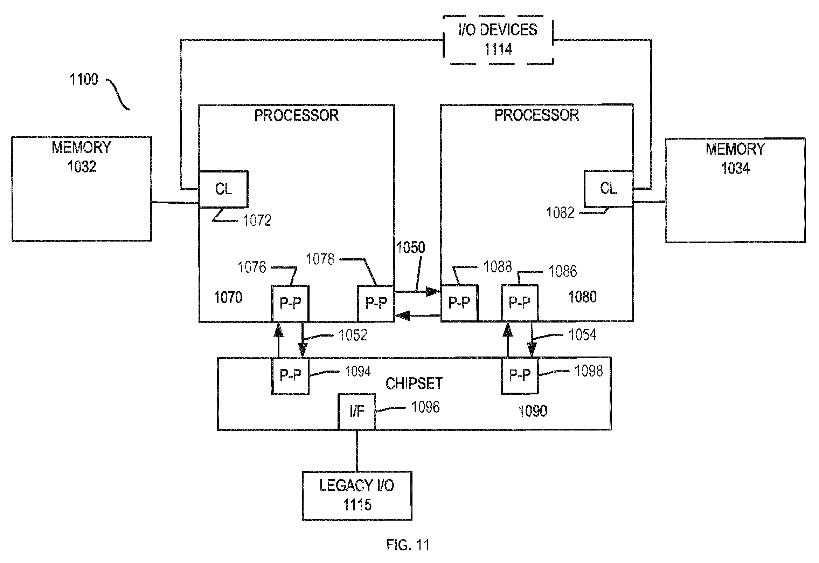

Referring now to **Figure 11****,** shown is a block diagram of a second more specific exemplary system 1100 in accordance with an embodiment of the present invention. Like elements in Figures 10 and 11 bear like reference numerals, and certain aspects of Figure 10 have been omitted from Figure 11 in order to avoid obscuring other aspects of Figure 11.

Figure 11 illustrates that the processors 1070, 1080 may include integrated memory and I/O control logic ("CL") 1072 and 1082, respectively. Thus, the CL 1072, 1082 include integrated memory controller units and include I/O control logic. Figure 11 illustrates that not only are the memories 1032, 1034 coupled to the CL 1072, 1082, but also that I/O devices 1114 are also coupled to the control logic 1072, 1082. Legacy I/O devices 1115 are coupled to the chipset 1090.

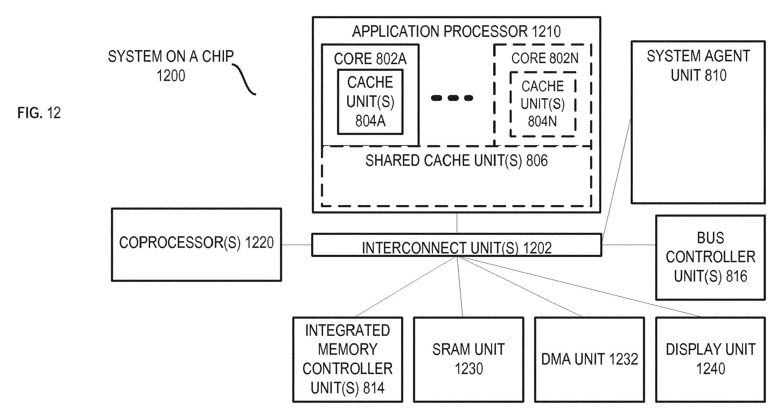

Referring now to **Figure 12****,** shown is a block diagram of a SoC 1200 in accordance with an embodiment of the present invention. Similar elements in Figure 8 bear like reference numerals. Also, dashed lined boxes are optional features on more advanced SoCs. In Figure 12, an interconnect unit(s) 1202 is coupled to: an application processor 1210 which includes a set of one or more cores 202A-N and shared cache unit(s) 806; a system agent unit 810; a bus controller unit(s) 816; an integrated memory controller unit(s) 814; a set or one or more coprocessors 1220 which may include integrated graphics logic, an image processor, an audio processor, and a video processor; an static random access memory (SRAM) unit 1230; a direct memory access (DMA) unit 1232; and a display unit 1240 for coupling to one or more external displays. In one embodiment, the coprocessor(s) 1220 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1030 illustrated in Figure 10, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

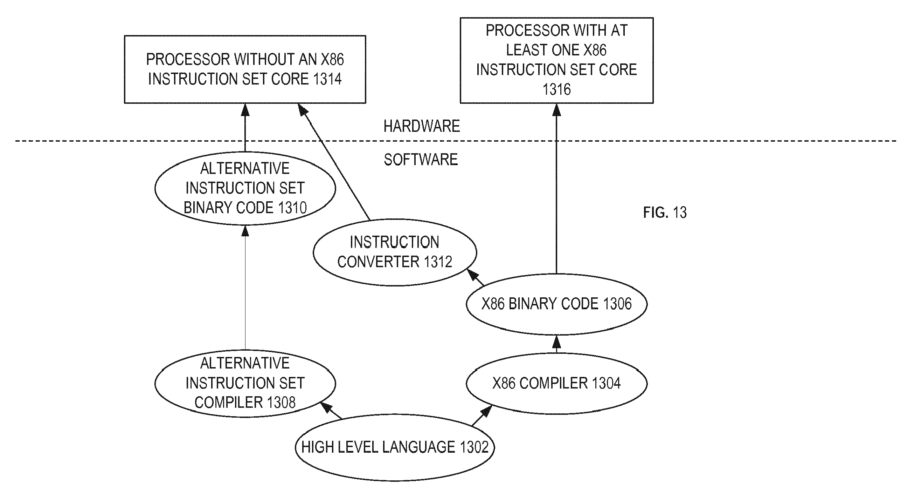

**Figure 13** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 13 shows a program in a high level language 1302 may be compiled using an x86 compiler 1304 to generate x86 binary code 1306 that may be natively executed by a processor with at least one x86 instruction set core 1316. The processor with at least one x86 instruction set core 1316 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1304 represents a compiler that is operable to generate x86 binary code 1306 (e.g., object code) that can, with or without additional linkage processing, be executed on the processor with at least one x86 instruction set core 1316. Similarly, Figure 13 shows the program in the high level language 1302 may be compiled using an alternative instruction set compiler 1308 to generate alternative instruction set binary code 1310 that may be natively executed by a processor without at least one x86 instruction set core 1314 (e.g., a processor with cores that execute the MIPS instruction set of MIPS Technologies of Sunnyvale, CA and/or that execute the ARM instruction set of ARM Holdings of Sunnyvale, CA). The instruction converter 1312 is used to convert the x86 binary code 1306 into code that may be natively executed by the processor without an x86 instruction set core 1314. This converted code is not likely to be the same as the alternative instruction set binary code 1310 because an instruction converter capable of this is difficult to make; however, the converted code will accomplish the general operation and be made up of instructions from the alternative instruction set. Thus, the instruction converter 1312 represents software, firmware, hardware, or a combination thereof that, through emulation, simulation or any other process, allows a processor or other electronic device that does not have an x86 instruction set processor or core to execute the x86 binary code 1306.

## Claims

1. An hardware apparatus comprising:
decoder hardware to decode an instruction;
operand retrieval hardware to retrieve data from at least one source operand associated with the instruction decoded by the decoder hardware;
execution hardware to execute the decoded instruction to generate a result including at least one status bit and to cause the result and at least one status bit to be stored in a single destination physical storage location, wherein the at least one status bit and result are accessible through a read of the single register.

2. The hardware apparatus of claim 1, further comprising:
register rename hardware to map an architectural register of the instruction to a physical register and to map a status register of the apparatus to the physical register.

3. The hardware apparatus of any of claims 1-2, wherein the physical register to store data in least significant bits and status bits in most significant bits.

4. The hardware apparatus of any of claims 1-2, wherein the physical register to store data in most significant bits and status bits in least significant bits.

5. The hardware apparatus of any of claims 1-4, wherein the at least one status bit comprises bits for at least one of carry, sign, overflow, parity, zero, and adjust.

6. The hardware apparatus of any of claims 1-5, wherein the instruction is one of a conditional branch, conditional jump, conditional move, and conditional memory operation.

7. The hardware apparatus of any of claims 1-6, wherein the instruction to include an opcode to indicate the instruction is to cause storage of the at least one status bit along with the result to the single destination physical storage location.

8. The hardware apparatus of any of claims 1-7, wherein the instruction to include a destination operand to indicate the instruction is to cause storage of the at least one status bit along with the result to the single destination physical storage location.
